Europäisches Patentamt

European Patent Office

Office européen des brevets

(11) Veröffentlichungsnummer: **0 320 457**

**A1**

## (12) EUROPÄISCHE PATENTANMELDUNG

(21) Anmeldenummer: 88810838.8

(22) Anmeldetag: 07.12.88

(51) Int. Cl.⁴: **C 04 B 41/87**
C 22 B 9/02, F 01 N 3/02

(30) Priorität: 09.12.87 CH 4808/87

(43) Veröffentlichungstag der Anmeldung:
14.06.89 Patentblatt 89/24

(84) Benannte Vertragsstaaten:
AT BE CH DE ES FR GB GR IT LI LU NL SE

(71) Anmelder: **SCHWEIZERISCHE ALUMINIUM AG**
**CH-3965 Chippis (CH)**

(72) Erfinder: **Maurer, Albert**
**Egelseeweg 4**
**CH-8240 Thayngen (CH)**

**Mizrah, Tiberiu**
**Hohlenbaumstrasse 90**
**CH-8200 Schaffhausen (CH)**

(54) Verfahren zum Beschichten eines Teils der Oberfläche eines porösen Keramikkörpers.

(57) Die Einsatzfähigkeit eines porösen Keramikkörpers mit dreidimensional vernetzter, miteinander verbundener offene Zellen aufweisender Struktur, insbesondere für Filterzwecke wird wesentlich durch seine Oberflächenempfindlichkeit eingeschränkt. Die Empfindlichkeit wird durch Auftragen einer Keramikschicht verbessert.

Ein Verfahren zum Beschichten eines Teils der Oberfläche eines porösen Keramikkörpers zeichnet sich dadurch aus, dass ein saugfähiges flächiges Material mindestens einseitig mit einer dünnen Schicht eines Keramikschlickers überzogen, mit der die Keramikschlicker enthaltenden Seite auf die zu verstärkende und/oder abzudichtende Oberfläche des ungebrannten Keramikkörpers gelegt, getrocknet und gemeinsam mit dem Keramikkörper gebrannt wird.

Das Verfahren wird vorteilhaft zur Herstellung elektrisch leitender Kontakte bei der Regenerierung von Filtern zur Reinigung der Abgase von Dieselmotoren durch elektrische Widerstandsheizung und/oder Zündung angewendet.

EP 0 320 457 A1

**Beschreibung**

### Verfahren zum Beschichten eines Teils der Oberfläche eines porösen Keramikkörpers

Die Erfindung betrifft ein Verfahren zum Beschichten eines Teils der Oberfläche eines porösen Keramikkörpers mit dreidimensional vernetzter, miteinander verbundener offene Zellen aufweisender Struktur durch Aufbringen einer Keramikschicht.

In der US-PS 3 090 094 wird die Herstellung eines derartigen porösen Keramikkörpers beschrieben. Zur einwandfreien Funktionstüchtigkeit eines solchen Keramikkörpers als Filterelement, beispielsweise zur Reinigung der Abgase von Verbrennungskraftmaschinen, insbesondere von Dieselmotoren oder zum Filtrieren von Metallschmelzen ist eine entsprechende Halterung zur Fixierung des Keramikkörpers in der Filteranordnung nötig. Die Keramikkörper sind immer sehr fragil und brechen sehr leicht bei direkter punktueller Belastung. Es wird daher danach getrachtet, möglichst Spannungen auf den Rand eines Keramikkörpers zu vermeiden, um die Verletzung der empfindlichen Keramikstege zu verhindern. Beispielsweise wird dies bei Abgaskatalysatoren für Ottomotoren beim sogenannten Einpacken (Canning) des Filterkörpers in einem Metallgehäuse dadurch bewerkstelligt, dass das Filter durch Umhüllen mit Metallgestricken und/oder keramischen Matten gegen Vibrationen, Verschiebungen und sonstige Beeinträchtigungen, die zu mechanischen Spannungen führen, geschützt wird.

Das Problem des Schutzes eines derartig verwendeten Keramikkörpers wird auch in der US-PS 4 540 535 beschrieben. Zur Lösung des Problems führt danach ein mehrmaliges Besprühen und Trocknen des Keramikkörpers mit einem Keramikschlicker gleicher keramischer Zusammensetzung wie der Körper, wobei die äusseren Poren des Keramikkörpers geschlossen werden. Neben der sehr umständlichen Handhabung hat dieses Verfahren den Nachteil, dass sehr viel Schlicker aufgetragen werden muss, um die offenen Poren zu schliessen und dass dabei ein wesentlicher Anteil des Keramikkörpers seiner eigentlichen Funktion nicht mehr zugeführt werden kann.

Die Erfinder haben sich daher die primäre Aufgabe gestellt, ein Verfahren zum Beschichten eines Teils der Oberfläche eines porösen Keramikkörpers mit dreidimensional vernetzter, miteinander verbundener offene Zellen aufweisender Struktur durch Auftragen einer Keramikschicht anzugeben, das die vorerwähnten Nachteile nicht aufweist, und eine abdichtende und verstärkende Oberfläche ergibt.

Die Aufgabe wird insbesondere im Zusammenhang mit der Regenerierung von als Filter zur Reinigung der Abgase von Verbrennungskraftmaschinen, insbesondere von Dieselmotoren, eingesetzten derartigen Keramikkörpern erweitert, indem die Beschichtung zusätzlich bei einer Regenerierung der Filter durch elektrische Widerstandsheizung und/oder Zündung als elektrischer Kontakt dienen soll.

Erfindungsgemäss wird die primär gestellte Aufgabe durch ein Verfahren gelöst, welches sich nach dem Wortlaut des Anspruchs 1 auszeichnet.

Vorteilhafte Weiterbildungen des erfindungsgemässen Verfahrens sind durch die Merkmale der Ansprüche 2 bis 5 gekennzeichnet.

Die erweiterte Aufgabe wird durch die Anwendung des erfindungsgemässen Verfahrens gelöst, wie sie durch den Wortlaut des Anspruchs 6 gekennzeichnet ist, und vorteilhafte Weiterbildungen der Anwendungen sind durch die Merkmale der Ansprüche 7 bis 11 gekennzeichnet.

In vorteilhafter Weise findet das vorgeschlagene Verfahren zur Herstellung von Filtern zur Reinigung der Abgase von Verbrennungskraftmaschinen, insbesondere von Dieselmotoren, Anwendung.

Bei der Flüssigmetallfiltration ist es häufig erforderlich, dem Anwender eines Filters der vorgenannten Art ein solches mit mechanisch verstärktem Filterrand anzubieten. Es hat sich insbesondere für diesen Zweck gezeigt, dass das erfindungsgemässe Verfahren zur Herstellung eines abdichtenden und verstärkenden Filterrandes geeignet ist, denn die entstehende Filterrandfläche enthält keine Vertiefungen, sondern ist glatt ausgebildet und passt sich damit dem entsprechenden Sitz der Filteranordnung dichtend an, sodass keine weiteren Hilfsmittel wie hitzebeständiges Keramikvliess oder ähnliches notwendig werden.

Aehnlich vorteilhafte Auswirkungen hat die Anwendung des erfindungsgemässen Verfahrens insbesondere für die Herstellung von Dieselrussfiltern. Je nach Filtertyp kann mit dem erfindungsgemässen Verfahren eine Oberfläche erzeugt werden, die nur als Verstärkung wirkt oder nur als Abdichtung oder beiden Zwecken dient. Die verschiedenen Möglichkeiten können durch die Wahl des Schlickers, der auf das flächige Material aufgebracht wird, und/oder durch die Auswahl von bandförmigem Material mit den gewünschten Eigenschaften hervorgebracht werden. So erzeugt beispielsweise offenes Gewebe einen verstärkenden Effekt der Oberfläche des Keramikkörpers ohne diese abzudichten, andererseits Papier, welches mit einer durchgehenden dünnen Schicht eines Keramikschlickers versehen wird, die auch nach dem Brand durchgehend dicht bleibt, eine abdichtende und verstärkende Oberfläche des Keramikkörpers.

Weitere vorteilhafte Merkmale und Einzelheiten der Erfindung ergeben sich nachfolgend aus der Beschreibung eines allgemeinen Ausführungsbeispiels.

Zunächst wird ein leicht saugfähiges Papier, Vliess oder sonstiges Gewebe nach den Massen des zu verstärkenden Randes des Keramikkörpers zugeschnitten. Anschliessend wird das verwendete Material mit einer dünnen Schicht eines Keramikschlickers mittels eines Pinsels oder sonstiger geeigneter Vorrichtungen überzogen. Beim Keramikschlicker kann es sich grundsätzlich um einen beliebigen Schlicker handeln wie beispielsweise einen Cordierit-, Aluminiumoxid-oder Mullit-haltigen; einzige Bedingung ist nur, dass dieser auf dem Keramikkörper haftet. Vorzugsweise wird jedoch der gleiche Schlicker gewählt, der zur Herstellung des porösen Keramikkörpers Verwendung fand. Die leichte Saugfähigkeit der Unterlage aus Papier, Vliess oder sonstigem Gewebe führt zu einer guten, gleichmässigen Haftung der dünnen Schlickerschicht. Die beschichtete Unterlage wird nun auf den zu verstärkenden Filterrand derart aufgebracht, dass sich die dünne Schlickerschicht mit dem vorzugsweisen nicht vorgetrockneten Schaumstoffkörper verbindet. Während des Trocknungsprozesses, welcher vorteilhafterweise zwischen ca. 80 und 100 °C vorgenommen wird, stellt sich eine Verbindung zwischen dem umhüllten Rand des noch nicht gebrannten porösen Keramikkörpers und dem aufgetrockneten Keramikschlicker ein. Insbesondere beim Einsatz einer Unterlage aus Papier kann diese vor dem anschliessenden Sinterbrand leicht abgezogen werden. Diese Massnahme ist allerdings nicht notwendig, da die Unterlage analog wie der Polyurethanschaum bei der Herstellung des porösen Keramikkörpers wahrend des Sinterprozesses verbrennt. Nach dem Brennprozess, üblicherweise bei entsprechend hohen Temperaturen ein Sinterprozess, erhält man einen porösen Keramikkörper, bei dem ein Teil der Oberfläche je nach Wahl des verwendeten Keramikschlickers und Materials als Unterlage durch Auftragen einer Keramikschicht abgedichtet und/oder verstärkt ist. Ein solcher Körper hat die erwünschte mechanische Randstabilität.

Soll die Regenerierung von Dieselrussfiltern der vorgenannten Art durch elektrische Widerstandsheizung und/oder Zündung erfolgen, so wird ein Schlicker verwendet, der nach dem Brand eine elektrisch leitfähige Keramikschicht ergibt, die als elektrischer Kontakt dient. Als Schlickerfeststoffmaterialien eignen sich für diese Zwecke insbesondere Siliziumkarbid oder bevorzugt Titandiborid oder Mischungen daraus. Vor allem aus dem Gemisch konnten mit Keramikkörper, gleich welche der vorgenannten chemischen Zusammensetzung diese aufwiesen, innig verbundene und im Gebrauch haltbare elektrische Kontakte hergestellt werden.

Besonders vorteilhaft ist es jedoch sowohl den Keramikkörper als auch die Kontakte aus dem gleichen Material zu fertigen, da dann Spannungen infolge Dehnungsänderungen durch die alternierende Temperaturbelastung im Gebrauch geringer sind als bei unterschiedlicher Materialpaarung.

**Patentansprüche**

1. Verfahren zum Beschichten eines Teils einer Oberfläche eines porösen Keramikkörpers mit dreidimensional vernetzter, miteinander verbundener offene Zellen aufweisende Struktur durch Auftragen einer Keramikschicht,

dadurch gekennzeichnet,

dass ein saugfähiges, flächiges Material mindestens einseitig mit einer dünnen Schicht eines Keramikschlickers überzogen, mit der die Keramikschlicker enthaltenden Seite auf die zu verstärkende und/oder abzudichtende Oberfläche des ungebrannten Keramikkörpers gelegt, getrocknet und gemeinsam mit dem Keramikkörper gebrannt wird.

2. Verfahren nach Anspruch 1, dadurch gekennzeichnet, dass der Brand bei einer Temperatur durchgeführt wird, bei der der getrocknete Keramikschlicker auf dem flächigen Material und der Keramikkörper miteinander versintern.

3. Verfahren nach Anspruch 1 oder 2, dadurch gekennzeichnet, dass als flächiges Material Papier, Vliess oder ein sonstiges Gewebe aus Textil- oder Keramikfasern verwendet wird.

4. Verfahren nach einem der Ansprüche 1 bis 3, dadurch gekennzeichnet, dass das mit einem Ueberzug aus Keramikschlicker versehene flächige Material porös ist und/oder nach dem Brand zu einer porösen Keramikschicht auf dem Keramikkörper führt.

5. Verfahren nach einem der Ansprüche 1 bis 4, dadurch gekennzeichnet, dass das mit dem Ueberzug aus Keramikschlicker versehene flächige Material nicht porös ist und/oder nach dem Brand zu einer dichten Keramikschicht auf dem Keramikkörper führt.

6. Anwendung des Verfahrens nach einem der Ansprüche 1 bis 5 zur Herstellung von Filtern zum Filtrieren von Metallschmelzen.

7. Anwendung des Verfahrens nach einem der Ansprüche 1 bis 5 zur Herstellung von Filtern zur Reinigung der Abgase von Verbrennungskraftmaschinen, insbesondere von Dieselmotoren.

8. Anwendung des Verfahrens nach einem der Ansprüche 1 bis 5 gemäss Anspruch 7, dadurch gekennzeichnet, dass ein Keramikschlicker verwendet wird, der nach dem Brand eine elektrisch leitfähige Keramikschicht ergibt, die als elektrisch leitender Kontakt bei der Regenerierung der Filter durch elektrische Widerstandsheizung und/oder Zündung dient.

9. Anwendung des Verfahrens nach einem der Ansprüche 1 bis 5 gemäss Anspruch 8 an einem aus elektrisch leitfähigen Material bestehenden porösen Keramikkörper.

10. Anwendung des Verfahrens nach einem der Ansprüche 1 bis 5 gemäss Anspruch 7, dadurch gekennzeichnet, dass die Keramikschicht aus Siliziumkarbid und/oder Titandiborid besteht.

11. Anwendung des Verfahrens nach einem der Ansprüche 1 bis 5 gemäss Anspruch 8, dadurch gekennzeichnet, dass der poröse Keramikkörper aus Siliziumkarbid und/oder Titandiborid besteht.

Europäisches Patentamt

**EUROPÄISCHER RECHERCHENBERICHT**

Nummer der Anmeldung

EP 88 81 0838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 436 538 (M. TOMITA et al.) <br> * Spalte 3, Zeilen 43-60 * <br> --- | 1,7 | C 04 B 41/87 <br> C 22 B 9/02 <br> F 01 N 3/02 |
| A | DE-A-3 529 684 (FA. WENGENRODT) <br> * Zusammenfassung * <br> --- | 8 | |
| A | CHEMICAL ABSTRACTS, Band 96, 1982, Seite 313, Nr. 167463x, Columbus, Ohio, US; & JP-A-81 169 314 (NIPPON ELECTRIC CO., LTD) 26-12-1981 <br> --- | 1,8 | |
| A | DE-C-3 140 980 (GAIL AG) <br> * Anspruch 1 * <br> --- | 1 | |
| A | FR-A-2 246 517 (MORGANITE CERAMIC FIBRES) <br> * Ansprüche 1,6,9,11 * <br> --- | 1,3 | |
| A | FR-A-2 193 797 (NISSAN MOTOR CO.) <br> * Anspruch 3 * <br> --- | 1,3 | |
| A | US-A-4 396 565 (M. TOMITA et al.) <br> * Zusammenfassung * <br> --- | | |
| P,A | DE-A-3 704 930 (DAIMLER-BENZ) <br> * Zusammenfassung * <br> ------ | 8,10 | |

**RECHERCHIERTE SACHGEBIETE (Int. Cl.4)**

C 04 B 41
C 22 B 9
F 01 N 3
B 32 B 18
B 01 D 39

Der vorliegende Recherchenbericht wurde für alle Patentansprüche erstellt

| Recherchenort | Abschlußdatum der Recherche | Prüfer |
|---|---|---|
| DEN HAAG | 10-03-1989 | DAELEMAN P.C.A. |